# EUROPEAN PATENT SPECIFICATION

(11) **EP 0 497 287 B1**
(45) Date of publication and mention of the grant of the patent: **29.11.1995**
(21) Application number: 92101375.1
(22) Date of filing: 28.01.1992
(51) Int. Cl.: A23K 1/16, A23K 1/18, A23L 1/30, A61K 33/00

(54) **Food supplement for strengthening bone and joints**
Nahrungszusatz zur Verstärkung der Knochen und Gelenke
Additif alimentaire pour le renforcement des os et des articulations

(30) Priority: 28.01.1991 FI 910416
(43) Date of publication of application: 05.08.1992
(73) Proprietor: FINFONTA IMPORT KY, SF-00931 Helsinki (FI)
(72) Inventor: Arhola, Vilho, SF-00870 Helsinki (FI); Kosonen, Timo, SF-01450 Vantaa (FI); Salminen, Aarre, SF-01450 Vantaa (FI)
(74) Representative: Prüfer, Lutz H., Dipl.-Phys.

(56) References cited:
- DE-A- 2 749 108
- DE-A- 3 316 726
- FR-A- 2 406 395
- FR-A- 2 430 729
- FR-A- 2 574 631
- US-A- 4 582 708
- COMMONWEALTH AGRICULTURAL BUREAUX, 1N044-02530, Nutrition ABS and REV; S. ROMIC: "Changes in some blood values in horses fed with fodder yeast and vitamins", & POLJOPRIVREDNA ZNANSTVENA SMOTRA, VOL. 27, 1971, PAGES 87-97

## Description

The invention relates to a food supplement intended for the prevention of stress injuries, joint inflammation and bone injuries, particularly in trotting horses. The food supplement can also be given to athletes, other racing animals, and mammals suffering from problems relating to the bones, joints and metabolism.

It is a well known fact that only 20 to 25% of foals in stables for trotting horses will ever have the chance to compete on a track. The rest will suffer from growth disorders, metabolic disorders and injuries, although they are otherwise capable of giving satisfactory results. Degenerative arthritis, loose fragments of bone and irregular bone growth are particularly common in horses.

Balanced calcium and phosphorus levels are important for bone strength in horses. The combination of calcium and phosphorus known as calcium hydroxyapatite is believed to be responsible for the strength of bone. Bone and blood both contain about twice as much calcium as phosphorus. If food contains too much phosphorus, blood levels of phosphorus increase and calcium is transferred from the bone to circulating blood, to maintain the balance (Spencer H. et al. J. Nutr. 108: 447, 1978). Training increases needs for energy. Feeding is therefore increased and the composition of the feed is changed. Concentrated feed contains too much phosphorus. Oats contains about four times more phosphorus than calcium. Wheat germ contains 10 to 11 times more phosphorus than calcium. It is therefore necessary to add calcium to feeds. However, addition of calcium alone does not solve problems relating to bones, in trotting horses in particular.

The effects of silicon have been very little studied, despite the fact that, after oxygen, silicon is the second commonest element in nature. According to the most recent studies, silicon is an important component of cartilage, connective tissue and skin. It is also important in mucopolysaccharide metabolism (K. Scmidt and W. Bayer).

Combinations of silicon and calcium have been known for a long time. In 1799, Vauquelin conducted experiments with hens, feeding them only oats. When he compared amounts of calcium and silicon in the feed to the amounts excreted in the faeces and in eggs, he found that the amount of calcium excreted was greater than the amount in the oats. With silicon, it was the other way round. Silicon was changed to calcium in the metabolism of the hens.

Large amounts of silicon are found in arteries, tendons, connective tissue, corneal and scleral tissues and cartilage. It has been shown that silicon plays an important role in calcification and thus promotes bone mineralization. Silicon also affects connective tissue and the formation of fibrous structures (Carlisle E.M., Ciba Foundation Symposium 1986, 123-39. ISSN 0300-5208). In animal studies, food deficient in silicon has been associated with alterations in cartilage matrix (Scmidt and Bayer).

Training and racing greatly increase needs for silicon. Animals suffer from stress but also become over-excited. Secretion of adrenaline is particularly high. Loeper and Golan have shown that in rats with adrenaline-induced arteriosclerosis silicon concentrations in the aorta decreased to 20%. Normal concentrations in the wall of the artery were restored by silicon supplementation and only minor changes related to arteriosclerosis were observed in the aorta. Other studies, by Loeper and others, have shown that a healthy (human) artery contains 14 times more silicon than an artery with pathological changes (Pfeiffer C.C., Gonthier P.I., Paris, Debard 1983, p. 327-30). The presence of adequate amounts of silicon is therefore essential for the health of joints and for blood circulation in, for example, trotting horses. A. Charnot, the leading medical scientist in Morocco, has studied numerous patients suffering from painful rheumatic diseases, such as rheumatoid arthritis, bone and joint inflammation, Paget's disease and incurable sciatic pains. Administration of silicon for a few months increased the mobility of patients significantly and alleviated pain in most cases (Piekos R. et al., Z. Anorg. Allgem. Chem. 1979, 454, 7, 187).

Scientists have not been able to determine the role played by magnesium. As far as humans are concerned, it has been established that a balanced intake of sodium, potassium and magnesium is important. Excessive sodium intake and inadequate magnesium intake is common (patent application no. 834309, and Karppinen H., Artery 1981, 9: 190-99). Since importance of the presence of magnesium is anticipated - magnesium is both a strong and a light element - its presence in the compound is justified, at least experimentally.

Adequate intakes and presence of vitamin D are known to be necessary for utilization of calcium in the body (J.L. Greger, Am. A. Cer. Chem. 1988, 796-800). Vitamin D is stored primarily in the liver but vitamin D supplementation is important for adequate calcium uptake, particularly in northern latitudes. Calcium alone does not prevent bone loss or other problems relating to bones (Niewoehner C., Am. A. Cer. Chem. 1988, 784-87). Vitamin A is necessary for the health of mucous membranes, bone growth and the keratin balance in cells, as well as for longitudinal bone growth in foals.

The simultaneous presence of vitamin C is necessary for the health of connective tissue and bones. Training and stress increase needs for vitamin C. On the other hand, it has been found that there must be compensation for the unfavourable effect which calcium has on the uptake of iron (Mehanso H. et al., Fed. Proc. 46: 913, 1987). Vitamin C is necessary for the uptake of iron.

The product relating to the invention also contains boron, a nonmetallic trace element. Boron does not occur widely in nature. Many boron compounds are very light, and extremely hard and durable. Boron has been used experimentally for over 15 years as supplementary therapy in rheumatoid arthritis. This has led to development of a new food supplement. Boron decreases the secretion of calcium, magnesium and phosphorus from the body. Boron is also involved in the production of vitamin D₃ in the body. It is therefore likely that the presence of boron will improve interactions between the other components of the product relating to the invention.

In the Melbourne University Medical Centre, boron (6 mg/day) was given to patients suffering from rheumatoid arthritis. In this double-blind study, boron supplementation reduced symptoms of arthritis (Travers R.L. et al. J. Nutr. Med. 1, 127-32, 1990). In addition to study of the effects of calcium and phosphorus, the effect of boron on bones has been studied, to some extent (Nielsen F.A., FASEB-J. 1,5, 394-97, 1987). There was perhaps reason to suppose that adequate amounts of boron decrease calcium loss.

The inventors have experimented with various combinations, of which that of the product relating to the invention has proved best. After a few weeks' treatment, results are visible in hooves, tail growth and stronger coat. In Finland, dozens of injured horses have been made fit to compete. Some of them had been considered completely beyond help by well known veterinary surgeons. Following treatment, these horses have been rehabilitated and they have been able to compete for long times. When the product relating to the invention was given to pregnant mares, the difference in foals was considerable. The foals were vigorous, swift in movement and had firm muscles. They eagerly sought colostrum, which is important to foals because it contains necessary immune bodies. No loose fragments of bone or growth disorders were observed in the foals. Their bones developed evenly.

Use of the product relating to the invention has shown that iron and calcium contained in dolomite are well absorbed. Apparently, silicon directs placement of calcium on the surfaces of bones and promotes absorption of iron, probably together with boron. Results have been surprising. The horses that have received the food supplement relating to the invention in a double-blind trial were 100% healthy and free from injury. As compared with traditional food supplements, the difference is striking.

The inventors based their investigations on data on the effects of certain elements, trace elements and vitamins on bones, cartilage, joints, connective tissue and metabolism.

However, discovering the combination was the result of guesswork, because the interactions between the various substances are not sufficiently reliably known. Variations in the hardnesses between superficial and internal parts of bone, and the effects of food supplements on hardnesses of bone surfaces, in particular, could only be surmised. Food supplements and additional calcium have been given to trotting horses for a long time but these measures have not helped to prevent injuries to any significant degree. It was therefore surprising to find a food supplement combination which gave results significantly better than those achieved earlier. It is possible that the efficacy of the food supplement relating to the invention results from simultaneous presences and beneficial interactions of the substances.

The example given here represents merely the combination of ingredients relating to the invention found best. It is obvious that the composition could vary according to the food and other supplements given. The inventive idea relates specifically to the combination of substances.

### Example 1: Ingredients of food supplement

Dolomite 89.9%
Silicious earth 10%
Vitamin A 0.06%
Vitamin C 0.05%
Vitamin D 0.025%
Boron 0.002%.

## Claims

1. A mixture containing calcium and silicon, intended for use as a food supplement, **characterized** by the fact that it contains about 90% dolomite, about 10% silicious earth, about 0.06% vitamin A, about 0.05% vitamin C, about 0.025% vitamin D and about 0.002% boron.

2. A mixture according to Claim 1, **characterized** by the fact that it contains dolomite as a source of magnesium and calcium.

## Patentansprüche

1. Mischung, die Calcium und Silizium enthält, die zur Benutzung als Nahrungsergänzung gedacht ist,
gekennzeichnet durch die Tatsache, daß sie ungefähr 90% Dolomit, ungefähr 10% Kieselgur, ungefähr 0,06% Vitamin A, ungefähr 0,05% Vitamin C, ungefähr 0,025% Vitamin D und ungefähr 0,002% Bor enthält.

2. Mischung nach Anspruch 1,
gekennzeichnet durch die Tatsache, daß sie Dolomit als Quelle für Magnesium und Calcium enthält.

## Revendications

1. Mélange contenant du calcium et du silicium, destiné à une utilisation en tant qu'additif alimentaire, caractérisé en ce qu'il contient environ 90% de dolomite, et environ 10% de terre siliciée, environ 0,06% de vitamine A, environ 0,05% de vitamine C, environ 0,025% de vitamine D et environ 0,002% de bore.

2. Mélange selon la revendication 1, caractérisé en ce qu'il contient de la dolomite en tant que source de magnésium et de calcium.
